# FASCICULE DE BREVET EUROPEEN

(11) **EP 1 645 100 B1**
(45) Date de publication et mention de la délivrance du brevet: **31.08.2016**
(21) Numéro de dépôt: 04744498.9
(22) Date de dépôt: 06.07.2004
(51) Int. Cl.: H04L 29/06

(54) **MÉTHODE DE CRÉATION ET D'ADMINISTRATION D'UN RÉSEAU LOCAL**
VERFAHREN ZUR HERSTELLUNG UND VERWALTUNG EINES LOKALEN NETZWERKS
METHOD FOR GENERATING AND MANAGING A LOCAL AREA NETWORK

(30) Priorité: 14.07.2003 CH 123303
(43) Date de publication de la demande: 12.04.2006
(73) Titulaire: Nagravision SA, 1033 Cheseaux-sur-Lausanne (CH)
(72) Inventeur: MOREILLON, Guy, CH-1040 Echallens (CH)
(74) Mandataire: Wenger, Joel-Théophile
(86) Numéro de dépôt international: PCT/IB2004/051130
(87) Numéro de publication internationale: WO 2005/006706

(56) Documents cités:
- EP-A1- 0 666 694
- WO-A-01/52473
- WO-A-01/67705

## Description

La présente invention concerne le domaine de la création et l'administration d'un réseau local, en particulier un réseau local connecté à un point d'accès à un flux de données à accès conditionnel.

La gestion de l'accès à des données soumises à conditions est bien connue et pratiquée de longue, date dans le domaine de la télévision à péage notamment.

L'utilisateur dispose d'un décodeur en charge de déchiffrer le flux chiffré grâce à des clés liées à son abonnement ou ses droits. Ces clés sont généralement stockées dans un module de sécurité de préférence amovible pour faire évoluer les fonctions offertes ainsi que la sécurité.

La majorité des décodeurs, une fois le flux de données déchiffré, convertissent ces données sous forme analogique pour être exploitées par un organe de visualisation tel qu'un écran de télévision.

L'avènement des écrans numériques a quelque peu bouleversé ce schéma. En effet, la sortie du décodeur vers l'écran étant de type numérique, cette sortie peut être utilisée de manière frauduleuse pour effectuer des copies illicites.

C'est pourquoi, avant que les écrans numériques, et plus généralement tous les appareils exploitant ces données sous forme numérique telles que les enregistreurs numériques, deviennent utilisés massivement, des solutions ont été proposées afin d'éviter la dissémination de données à accès conditionnel.

Il a donc été proposé une protection de bout en bout du contenu et donc de conserver sous forme chiffrée ce contenu jusqu'à l'organe de restitution (téléviseur par exemple).

Là source telle qu'un décodeur ou un lecteur de DVD va traiter le contenu chiffré et en autoriser l'accès pour autant que les conditions soient remplies (selon l'abonnement de l'utilisateur par exemple). Le contenu, avant d'être envoyé sur le réseau local de l'utilisateur, est rechiffré selon une clé propre à ce réseau afin qu'il ne puisse être accessible que sur ce réseau. Toute utilisation hors de ce réseau est impossible car la clé est unique par réseau domestique.

La notion de réseau domestique, bien que définie par rapport à un utilisateur, peut se révéler floue car un voisin peut facilement se connecter sur le même réseau et dont disposer de la même clé de réseau. C'est pourquoi la solution la plus simple est de limiter le nombre de participants à un réseau local.

Pour qu'un tel réseau local sécurisé puisse être utilisé, il faut que chaque dispositif dispose d'un module de sécurité qui va contenir les secrets propres à ce réseau. Ces modules sont en général sous la forme d'une carte à puce amovible ou des modules de sécurité directement montés dans l'appareil.

Selon une première solution connue, cette notion de limitation a été réalisée par la transmission du caractère géniteur de l'appartenance au réseau. Pour l'installation d'un réseau local, un premier module contient ou est capable de générer la clé qui servira de point commun à ce réseau. Une fois que ce premier module a généré la première clé, il devient module géniteur et peut fonctionner d'une manière solitaire. Lors de l'apparition d'un autre module sur ce même réseau, ce caractère géniteur est transmis à ce second module permettant à ce dernier d'appartenir au même réseau. Le premier module perd la faculté de géniteur et cette faculté est transférée au second module. Bien entendu, d'autres paramètres tels que le nombre de futurs modules participant à ce réseau est également décrémenté et stocké dans le nouveau module géniteur.

Cette capacité génitrice se déplaçant répond à des critères de sécurité car un module ne peut introduire qu'un seul autre module dans le même réseau. Néanmoins cette solution pose des problèmes car la chaîne peut s'interrompre par méconnaissance du principe si un utilisateur se sépare d'un de ses éléments qui justement était devenu le module géniteur. De plus, si l'appareil dans lequel se trouve ce module devait être endommagé, l'utilisateur le ramène auprès du point de vente et un échange avec un autre appareil provoque l'interruption de la possibilité d'étendre ce réseau.

Le document WO01/67705 décrit un système de transfert sécurisé et de gestion de données sur le réseau Internet comprenant un module de transfert et d'encryption de données dans une unité d'utilisateur, et un module de gestion de données dans une unité serveur. Le transfert de données est effectué par un déplacement des données d'une fenêtre affichée sur l'écran associée à l'unité utilisateur de ou vers une fenêtre associée à l'unité serveur. Chaque fenêtre est associée à un mot de passe de manière à ce que le déplacement des données d'une fenêtre à l'autre entraîne l'encryption ou la ré-encryption à partir d'un mot de passe associé à l'autre. Le système utilise une encryption à clés symétriques couplée au protocole de transfert de fichiers et permet un transfert sécurisé de fichiers de données de grande taille égale ou supérieure à 100 Mégaoctets. Ce transfert de données de l'unité serveur vers l'unité utilisateur ou vice versa peut s'effectuer un nombre illimité de fois indépendamment du réseau et de l'emplacement des unités sur le réseau.

**Le document** EP 0 666 694 **décrit la transmission de contenus à accès condition et la diffusion dans un réseau régional. Le dispositif en tête de pont (headend) reçoit le contenu, le décrypte et le re-encrypte pour le transmettre aux terminaux connectés à ce réseau régional. Le dispositif en tête de pont peut également se charger du control d'accès et de la facturation. Le format de re-encryption est différent du format d'encryption original afin de minimiser les risques d'attaques contre le contenu encrypté.**

Le but de la présente invention est de proposer une méthode de création et d'administration d'un réseau local qui permette de pallier les inconvénients décrits ci-dessus.

**Ce but est atteint par une méthode de création et d'administration d'un réseau local, ce réseau comprenant au moins un dispositif de diffusion et de rechiffrement d'un flux de données chiffrées et un dispositif de restitution de tout ou partie desdites données chiffrées, ces dispositifs comprenant des modules de sécurité, cette méthode comprenant les étapes suivantes initiales :**
- **connexion d'un module de sécurité dit maître dans un dispositif de diffusion et de rechiffrement ou dans un dispositif de restitution connecté au réseau local,**
- **établissement d'une clé de réseau par ledit module de sécurité maître,**
- **transmission sécurisée de cette clé de réseau à un ou des modules de sécurité dits utilisateur,**
**et lors de la réception d'un flux de données chiffrées par un point d'accès du réseau :**
- **réception par un ledit dispositif de diffusion et de rechiffrement du flux de données chiffrées;**
- **vérification par le module de sécurité lié audit dispositif de diffusion et de rechiffrement de l'existence de droit d'accès audit flux de données chiffrées;**
- **en cas d'existence des droits, déchiffrement des données chiffrées grâce aux informations fournies par le module de sécurité associé à ce dispositif de diffusion et de rechiffrement;**
- **rechiffrement des données par ledit dispositif de diffusion et de rechiffrement par une clé locale,**
- **transmission des données rechiffrées par ladite clé locale au dispositif de restitution,**
- **déchiffrement par ledit dispositif de restitution grâce au module de sécurité utilisateur qui lui est associé disposant de moyens pour retrouver la clé locale.**

Un dispositif de restitution est un dispositif dans lequel il est impératif que les données soient déchiffrées en vue de leur utilisation, de manière sonore, visuelle ou autre telles que données boursières ou des jeux. L'exemple le plus caractéristique est un téléviseur.

Toutes les autres étapes de déplacement des données sont faites sur des données chiffrées.

Une clé de session est une clé qui est générée aléatoirement et qui est ensuite chiffrée avec la clé de réseau. Les données chiffrées sont accompagnées par cette clé de session chiffrée par la clé de réseau. Ainsi, la connaissance de la clé de réseau permet d'obtenir la clé de session et d'accéder aux données.

On peut naturellement envisager d'utiliser directement la clé de réseau et ne transmettre que les données rechiffrées. Pour la suite de la description, la clé locale recouvre les deux notions à savoir la clé de session ou la clé de réseau.

Pour le chiffrement des données il existe deux principes. Le premier fait référence au chiffrement par la clé locale de l'ensemble des données. Le module de sécurité appelé module convertisseur dispose des moyens, si les droits existent, pour déchiffrer les données et les rechiffrer avec la clé locale. Suivant le débit et la taille des données, les capacités requises pour cette opération peuvent être très importantes.

Un second principe est basé sur un fichier de clés, connu sous l'appellation "mots de contrôle". Les données proprement dites ne sont pas modifiées et restent chiffrées par l'ensemble des clés, seul le fichier de clés est déchiffré par le module convertisseur et rechiffré par la clé locale.

In est à noter que l'ensemble des clés peut être réduit à une clé par événement et traitée comme décrit précédemment c'est-à-dire que le message comprenant cette clé est déchiffrée par le module convertisseur et rechiffré par la clé locale.

Un dispositif de diffusion et de rechiffrememt est par exemple un décodeur connecté à un réseau fournissant des données à accès conditionnel ou un lecteur de données chiffrées tel qu'un lecteur DVD.

Ce dispositif vérifie si le droit existe pour déchiffrer les données avant de les diffuser dans le réseau local. Si ce droit existe, après l'étape de déchiffrement, elles sont rechiffrées grâce à la clé locale.

En finalité, ces données ne pourront être exploitées que sur ce réseau.

Ces données ainsi rechiffrées peuvent être stockées sur un disque dur ou gravée sur un DVD. L'intérêt du réseau local réside dans le fait que ces données sont inex-ploitables en dehors de ce réseau local. Lors de l'exploitation de ces données, le -dispositif de stockage va diffuser les données dans le réseau, ces données comprenant une partie utile chiffrée (audio et vidéo par exemple) et une partie de gestion qui comprend la clé de session chiffrée par la clé de réseau.

Le module de sécurité maître sera en charge d'initialiser chaque module de sécurité utilisateur voulant faire partie de ce réseau. Ainsi, pour l'utilisateur il semble clair que ce premier module a une fonction particulière et qu'il est important de ne pas l'égarer.

Ce module maître contient également un compteur définissant le nombre maximal de modules qui peuvent être initialisés et un certificat prouvant l'appartenance de ce module au système de réseaux locaux.

Le problème de se séparer d'un appareil dans lequel se trouve le module maître est donc résolu. Pour des raisons pratiques, le module maître aura une distinction visuelle par rapport aux autres modules.

L'établissement d'une clé de réseau peut être effectué de deux manières. La première étant de générer aléatoirement cette clé lors de la première initialisation du réseau local.

La seconde consistant à utiliser une clé chargée lors d'une procédure de personnalisation du module maître. Les clés sont donc connues à l'avance par l'autorité émettrice.

Le module maître a pour première mission d'initialiser un réseau. Le module utilisateur est un membre passif de ce réseau et va recevoir la clé de réseau établie par le module maître. Dans la pratique, il est possible d'intégrer un module utilisateur dans le module physique contenant le module maître. Ceci permet d'opérer dans un réseau avec un seul module, l'initialisation consistant à transférer la clé réseau de la partie maître à la partie utilisateur d'un même-module physique.

L'invention sera mieux comprise grâce à la description détaillée qui va suivre et qui se réfère au dessin annexé qui est donné à titre d'exemple nullement limitatif, et qui décrit la configuration d'un réseau local.

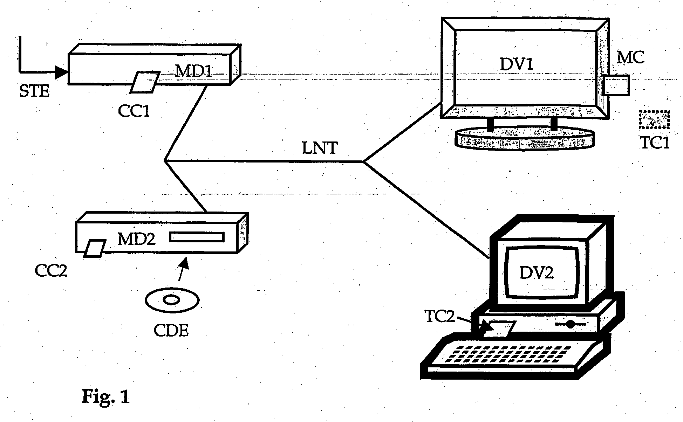

Sur la figure 1, le réseau local est identifié LNT. Il relie les différents éléments connectés dans une maison par exemple.

Il existe deux types de dispositifs à savoir les dispositifs de restitutions tels qu'un téléviseur DV1 et un ordinateur DV2. Les autres dispositifs sont les dispositifs de diffusion et de déchiffrement tel qu'un décodeur MD1 ou un-lecteur de disques MD2.

Le flux de données chiffrées STE entre dans le décodeur MD1 pour être traité. Ce décodeur dispose d'un module de sécurité CC1 qui comprend les droits liés au contenu des donnes chiffrées. Le module CC1 vérifie les droits pour permettre l'accès à ces données chiffrées et, dans le cas de transmission de données chiffrées par mots de contrôle CW, déchiffre ces mots de contrôle et les rechiffre par la clé locale.

Selon le mode d'opération, la clé locale est une clé dé session générée par le module convertisseur MD1 et chiffrée par la clé de réseau. Cette étape de chiffrement de la clé locale est effectuée non pas dans le module convertisseur MD1, mais dans un module utilisateur TC qui seul dispose de la clé de réseau.

Lors d'une etape d'initalisation, le module convertisseur génère une clé de session aléatoire. En collaboration avec le décodeur, il transmet une requête afin de déterminer la présence d'un réseau local. Un dispositif de restitution va réagir, par exemple le téléviseur DV1, et transmettre la clé publique de son module utilisateur TC1.

Cette clé va servir à chiffrer la clé de session par le module convertisseur MD1 et transmettre cet ensemble chiffré au module utilisateur du téléviseur.

Le module utilisateur TC1, grâce à sa clé privée, va déchiffrer ce message et extraire la clé de session. Il va ensuite chiffrer cette clé de session par la clé de réseau et transmettre ce nouveau message au module convertisseur.

Lorsque le module convertisseur reçoit un message comprenant un mot de contrôle provenant du flux de données STE à accès conditionnel, il vérifie les droits contenus dans ce message et, si les droits sont présents, déchiffre le mot de contrôle et le rechiffre par la clé de session. Le nouveau message va contenir le mot de contrôle rechiffré par la clé de session et la clé de session chiffrée par la clé de réseau.

Le fonctionnement d'un dispositif tel qu'un lecteur de DVD est sensiblement similaire. Ce dispositif comprend également un module convertisseur CC2 qui dispose des moyens pour accéder aux données chiffrées contenues sur le disque.

Pour notre exemple, on considérera que les données sont chiffrées par une clé propre à ce contenu selon un algorithme et/ou une clé contenue dans le module convertisseur.

Ce module convertisseur CC2 vérifie si le titulaire du module dispose du droit pour déchiffrer et diffuser le disque CDE sur un réseau local. Si le droit existe, il peut y avoir deux possibilités:
- le module convertisseur CC2 déchiffre le contenu du disque et rechiffre par la clé de réseau, les données rechiffrées et la clé de réseau étant transmise au dispositif de restitution,
- le module convertisseur se contente de chiffrer la clé du disque par la clé de réseau et transmettre les données initiales et la clé de disque chiffrée par la clé de réseau. Cette méthode implique que la clé de disque soit propre à chaque contenu; dans le cas inverse, l'accès à un contenu ouvre la possibilité d'accéder à tous les contenus.

Selon un des aspects de l'invention, le module maître MC se trouve dans le téléviseur DV1. Ce module maître a permis la génération d'un réseau local et dispose de la clé de réseau NK. Dans une forme d'exécution, ce module comprend également les fonctionnalités d'un module utilisateur et peut donc déchiffrer les données chiffrées transmises par un dispositif tel que le décodeur MD1.

Lors de la connexion d'un second module utilisateur TC2 vierge connecté ici dans un ordinateur DV2, une communication s'établit entre le module maître MC et ce module vierge. Après authentification mutuelle, le module maître transmet la clé de réseau NK au module utilisateur TC2 qui a dès lors la possibilité de recevoir et de déchiffrer des données pour ce réseau local. Dès ce moment, il n'a plus besoin de la présence de la clé maître MC pour accéder aux données chiffrées par la clé locale car il dispose de la clé réseau NK.

Le principe de base pour qualifier un réseau local est le nombre de modules utilisateur possible. Cette fonction est dédiée au module maître qiui-décrémente son compteur à chaque fois qu'un module utilisateur reçoit la clé de réseau.

Si l'on souhaite clairement différencier la fonction de création de réseau et la fonction d'accès aux données chiffrées, il est possible de n'inclure dans le module maître MC que la fonction de gestionnaire de réseau. Après avoir initialisé le module utilisateur TC2, on retire le module maître MC pour introduire un module utilisateur TC1 préalablement configuré.

L'invention s'étend également à une méthode de vérification de la conformité d'url réseau local. Lors de la négociation entre un module terminal TC et un module convertisseur CC, le module terminal transmet des informations propres au module maître MC à la base de la formation de ce réseau. Il peut s'agir d'un identifiant, d'une signature ou d'un certificat (X509 par exemple).

Du fait que seuls des modules maîtres MC peuvent générer un réseau local, on va s'intéresser uniquement à ce type de module dont le nombre est bien inférieur au nombre de modules utilisateur en service.

Le module convertisseur CC va stocker cette information que nous appellerons identifiant de réseau local.

Dans le cas d'un décodeur de télévision, à péage, il est amené à se connecter à un centre de gestion pour des mises à jour, pour des raisons de statistiques ou pour la facturation de la consommation locale.

A cette occasion, le module convertisseur CC transmet, avec les données usuelles, l'identifiant de réseau local connecté à ce décodeur.

Le centre de gestion dispose d'une liste d'identifiants de réseaux locaux non autorisés à recevoir des données déchiffrées par un module convertisseur et communique au dit module cette information.

Le module convertisseur peut dès lors accepter ou refuser de fonctionner avec un tel réseau.

Il est à noter qu'un module convertisseur peut être amené à interagir avec plusieurs réseaux locaux, si par exemple, un tiers venait connecter son module terminal dans le téléviseur DV1. Dans cette configuration, le module convertisseur peut conserver dans sa mémoire plusieurs identifiants de réseau.

Dans une forme de réalisation, les données chiffrées, en particulier les messages contenant la ou les clés de déchiffrement, peuvent contenir des conditions pour qu'une telle vénficatioh soit obligatoire et préalable à tout rechiffrement pour un réseau local donné.

Le décodeur va donc exécuter une opération de vérification afin de valider l'identifiant du réseau local qui lui est connecté. Si lors de la négociation de la clé locale, un autre identifiant de réseau est annoncé, il ne permettra pas le déchiffrement des mots de contrôle vers le réseau local.

Ainsi, il est possible d'introduire des conditions dans les données chiffrées ou les clés les accompagnant pour définir un niveau de sécurité

Il est à noter que la forme d'application de l'invention se prête particulièrement bien à des dispositifs de restitution disposant de module de sécurité directement monté sur le print. Ce module, sous la forme d'un circuit électronique (éventuellement soudé), va comprendre toutes les fonctionnalités d'un module de sécurité utilisateur. Seul le module maître sera amovible et connecté uniquement aux fins d'initialiser le réseau et donc de charger la clé de réseau dans ce circuit électronique. Si ce dispositif doit joindre un autre réseau, il suffit d'autoriser l'effacement de l'appartenance au réseau précédent et autoriser de joindre le nouveau réseau.

Pour une réutilisation des données qui auraient été stockées et chiffrées par la clé de réseau, il reste toujours le module maître qui joue alors la fonction de module utilisateur avec sa propre clé de réseau.

## Revendications

1. Méthode de création et d'administration d'un réseau local, ce réseau comprenant au moins **un dispositif de diffusion et de rechiffrement d'un flux de données chiffrées et un dispositif de restitution** de **tout ou partie desdites données chiffrées,** ces dispositifs comprenant des modules de sécurité cette méthode comprenant les étapes suivantes initiales :
- connexion d'un module de sécurité dit maître dans un dispositif **de diffusion et de rechiffrement ou dans un dispositif de restitution** connecté au réseau local,
- établissement d'une clé de réseau par ledit module de sécurité maître.
- transmission sécurisée de cette clé de réseau à un ou des modules de sécurité dits utilisateur,
**et lors de la réception d'un flux de données chiffrées par un point d'accès du réseau :**
- **réception par un ledit dispositif de diffusion et de rechiffrement du flux de données chiffrées;**
- **vérification par le module de sécurité lié audit dispositif de diffusion et de rechiffrement de l'existence de droit d'accès audit flux de données chiffrées;**
- **en cas d'existence des droits, déchiffrement des données chiffrées grâce aux informations fournies par le module de sécurité associé à ce** dispositif de diffusion et de rechiffrement ;
- rechiffrement des données par ledit dispositif **de diffusion et de rechiffrement** par une clé locale,
- transmission des données rechiffrées **par ladite clé locale** au dispositif de restitution,
- déchiffrement par ledit dispositif de restitution grâce au module de sécurité utilisateur qui lui est associé disposant de moyens pour retrouver **la clé locale.**

2. Méthode de création et d'administration d'un réseau local selon la revendication 1, **caractérisée en ce que** lesdites données comportent une partie utile chiffrée d'une part et une partie de gestion en charge du contrôle du déchiffrement de cette partie utile chiffrée d'autre part; et **en ce que** les étapes de déchiffrement et de rechiffrement des données sont appliquées à la partie utile.

3. Méthode de création et d'administration d'un réseau local selon la revendication 1, **caractérisée en ce que** lesdites données comportent une partie utile chiffrée d'une part et une partie de gestion en charge du contrôle du déchiffrement de cette partie utile chiffrée d'autre part, et **en ce que** les étapes de déchiffrement et de rechiffrement des données sont appliquées à **la** partie de gestion.

4. Méthode de création et d'administration d'un réseau local selon la revendication 1, **caractérisée en ce que** la clé locale est une clé de session générée aléatoirement et chiffrée par la clé de réseau.

5. Méthode de création et d'administration d'un réseau local selon la revendication 1, **caractérisée en ce que** la clé locale est la clé de réseau.

6. Méthode de création et d'administration d'un réseau local selon la revendication 1, **caractérisée en ce que** l'établissement de la clé de réseau est obtenue par génération pseudo-aléatoire d'une clé lors de l'initialisation du réseau local.

7. Méthode de création et d'administration d'un réseau local selon la revendication 1, **caractérisée en ce que** l'établissement de la clé de réseau est effectuée lors d'une étape d'initialisation du module maître.

8. Méthode de création et d'administration d'un réseau local selon la revendication 1, **caractérisée en ce que** le module maître est localisé dans un module de sécurité amovible.

9. Méthode de création et d'administration d'un réseau local selon la revendication 7, **caractérisée en ce que** ce module de sécurité amovible comprend un module utilisateur faisant partie du réseau administré par le module maître.

10. Méthode de création et d'administration d'un réseau local selon la revendication 1, **caractérisée en ce que** les modules de sécurité utilisateur sont sous forme d'un circuit électronique monté lors de la fabrication du dispositif de restitution.

11. Méthode de création et d'administration d'un réseau local selon la revendication 1, **caractérisée en ce que** le module de sécurité utilisateur est sous forme d'un module de sécurité amovible.

12. Méthode de création et d'administration d'un réseau local selon la revendication 1, **caractérisée en ce que** le dispositif de diffusion et de rechiffrement comprend un module de sécurité dit module convertisseur, ce module recevant et conservant un identifiant du module maître ayant créé le réseau pour lequel le module convertisseur rechiffre des données.

13. Méthode de création et d'administration d'un réseau local selon la revendication 10, **caractérisée en ce que** cet identifiant du module maître est transmis à un centre de gestion lors d'une phase de connexion avec ledit centre de gestion.

## Patentansprüche

1. Verfahren zur Schaffung und Verwaltung eines lokalen Netzes, wobei das Netz mindestens eine Vorrichtung zur Verbreitung und zum Neuverschlüsseln eines Stroms von verschlüsselten Daten umfasst und eine Vorrichtung zur Wiedergabe der ganzen oder eines Teils der besagten verschlüsselten Daten, wobei diese Vorrichtungen Sicherheitsmodule umfassen, wobei dieses Verfahren die folgenden Anfangsphasen umfasst:
- Anschluss eines Sicherheitsmoduls, genannt Hauptmodul, in einer Vorrichtung zur Verbreitung und zum Neuverschlüsseln oder in einer mit dem lokalen Netz verbundenen Wiedergabevorrichtung,
- Erstellung eines Netzschlüssels durch das Hauptsicherheitsmodul
- gesicherte Übertragung dieses Netzschlüssels an ein oder mehrere Sicherheitsmodule, Benutzer genannt,
und bei Empfang eines Stroms von verschlüsselten Daten durch einen Zugangspunkt des Netzes:
- Empfang durch eine besagte Vorrichtung zur Verbreitung und zum Neuverschlüsseln des verschlüsselten Datenstroms;
- Prüfung, durch das mit der Vorrichtung zur Verbreitung und zum Neuverschlüsseln verbundene Sicherheitsmodul, ob ein Zugangsrecht zu dem genannten verschlüsselten Datenstrom besteht;
- falls Rechte bestehen, Entschlüsselung der verschlüsselte Daten dank der vom mit dieser Vorrichtung zur Verbreitung und zum Neuverschlüsseln verbundenen Sicherheitsmodul gelieferten Informationen;
- Neuverschlüsseln der Daten durch besagte Vorrichtung zur Verbreitung und zum Neuverschlüsseln mittels eines lokalen Schlüssels,
- Übertragung der neuverschlüsselten Daten durch den lokalen Schlüssel an die Wiedergabevorrichtung,
- Entschlüsselung durch die Wiedergabevorrichtung dank des Benutzer-Sicherheitsmoduls, das mit ihm verbunden ist und über Mittel verfügt, um den lokalen Schlüssel wiederaufzufinden.

2. Verfahren zur Schaffung und Verwaltung eines lokalen Netzes nach Anspruch 1, **gekennzeichnet dadurch, dass** besagte Daten einerseits ein verschlüsseltes Nutzteil umfassen und andererseits ein Verwaltungsteil zur Kontrolle der Entschlüsselung dieses verschlüsselten Nutzteils, sowie dadurch, dass die Entschlüsselungs- und Neuverschlüsselungsphasen der Daten auf das Nutzteil angewendet werden.

3. Verfahren zur Schaffung und Verwaltung eines lokalen Netzes nach Anspruch 1, **gekennzeichnet dadurch, dass** besagte Daten einerseits ein verschlüsseltes Nutzteil umfassen und andererseits ein Verwaltungsteil zur Kontrolle der Entschlüsselung dieses verschlüsselten Nutzteil, sowie dadurch, dass die Entschlüsselungs- und Neuverschlüsselungsphasen der Daten auf das Verwaltungsteil angewendet werden.

4. Verfahren zur Schaffung und Verwaltung eines lokalen Netzes nach Anspruch 1, **gekennzeichnet dadurch, dass** der lokale Schlüssel ein zufällig erzeugter Sitzungsschlüssel ist, der durch den Netzschlüssel verschlüsselt wird.

5. Verfahren zur Schaffung und Verwaltung eines lokalen Netzes nach Anspruch 1, **gekennzeichnet dadurch, dass** der lokale Schlüssel der Netzschlüssel ist.

6. Verfahren zur Schaffung und Verwaltung eines lokalen Netzes nach Anspruch 1, **gekennzeichnet dadurch, dass** die Erstellung des Netzschlüssels durch pseudozufällige Erzeugung eines Schlüssels bei der Initialisierung des lokales Netzes erhalten wird.

7. Verfahren zur Schaffung und Verwaltung eines lokalen Netzes nach Anspruch 1, **gekennzeichnet dadurch dass** die Erstellung des Netzschlüssels in einer Initialisierungsphase des Hauptmoduls durchgeführt wird.

8. Verfahren zur Schaffung und Verwaltung eines lokalen Netzes nach Anspruch 1, **gekennzeichnet dadurch, dass** das Hauptmodul in einem entfernbaren Sicherheitsmodul untergebracht ist.

9. Verfahren zur Schaffung und Verwaltung eines lokalen Netzes nach Anspruch 7, **gekennzeichnet dadurch, dass** dieses entfernbare Sicherheitsmodul ein Benutzermodul umfasst, das zu dem vom Hauptmodul verwalteten Netz gehört.

10. Verfahren zur Schaffung und Verwaltung eines lokalen Netzes nach Anspruch 1, **gekennzeichnet dadurch, dass** die Benutzer-Sicherheitsmodule die Form einer elektronischen Schaltung haben, die bei der Herstellung der Wiedergabevorrichtung montiert wird.

11. Verfahren zur Schaffung und Verwaltung eines lokalen Netzes nach Anspruch 1, **gekennzeichnet dadurch, dass** das Benutzer-Sicherheitsmodul die Form eines entfernbaren Sicherheitsmoduls hat.

12. Verfahren zur Schaffung und Verwaltung eines lokalen Netzes nach Anspruch 1, **gekennzeichnet dadurch, dass** die Vorrichtung zur Verbreitung und zum Neuverschlüsseln ein Sicherheitsmodul umfasst, genannt Konvertermodul; dieses Modul empfängt und speichert eine Kennung des Hauptmoduls, das das Netz geschaffen hat, für das das Konvertermodul Daten neuverschlüsselt.

13. Verfahren zur Schaffung und Verwaltung eines lokalen Netzes nach Anspruch 10, **gekennzeichnet dadurch, dass** diese Kennung des Hauptmoduls in einer Phase der Verbindung mit einem Verwaltungszentrum an dieses Verwaltungszentrum übertragen wird.

## Claims

1. Method for creating and managing a local network, this network comprising at least one transmitting and re-encrypting device for an encrypted data stream and a restitution device for all or part of said encrypted data, said devices comprising security modules, the method comprising the following initial steps:
- connecting a master security module in one of the transmitting and re-encrypting device or in a restitution device connected to the local network,
- establishing a network key by said master security module,
- securely transmitting this network key to one or several user security modules of said users;
and while receiving encrypted data by an access point of the network:
- receiving by said transmitting and re-encrypting device of the encrypted data,
- verifying by the security module of the transmitting and re-encrypting device if access rights exist related to said encrypted data,
- in the positive event, decrypting encrypted data using the information provided by the security module associated with said transmitting and re-encrypting device,
- re-encrypting of the data by said transmitting and re-encrypting device with a local key,
- transmitting the re-encrypted data by the local key to the restitution device
- decrypting by said restitution device, using the associated user security module, which comprises means for retrieving the local key.

2. Method for creating and managing a local network according to claim 1, **characterized in that** said data comprises on one hand an encrypted payload part and one the other hand a management part in charge of the control of the decryption of said payload part, and **in that** the steps of decryption and re-encryption of the data are applied on the payload part.

3. Method for creating and managing a local network according to claim 1, **characterized in that** said data comprises on one hand an encrypted payload part and one the other hand a management part in charge of the control of the decryption of said payload part, and **in that** the steps of decryption and re-encryption of the data are applied on the management part.

4. Method for creating and managing a local network according to claim 1, **characterized in that** the local key is a randomly generated session key encrypted by the network key.

5. Method for creating and managing a local network according to claim 1, **characterized in that** the local key is the network key.

6. Method for creating and managing a local network according to claim 1, **characterized in that** the establishment of the network key is obtained by the pseudorandom generation of a key during the initialization of the local network.

7. Method for creating and managing a local network according to claim 1, **characterized in that** the establishment of the network key is carried out during an initialization step of the master module.

8. Method for creating and managing a local network according to claim 1, **characterized in that** the master module is placed in a removable security module.

9. Method for creating and managing a local network according to claim 7, **characterized in that** said removable security module comprises a user module forming part of the network administrated by the master module.

10. Method for creating and managing a local network according to claim 1, **characterized in that** the user security modules are in the form of an electronic circuit mounted during the manufacture of the restitution device.

11. Method for creating and managing a local network according to claim 1, **characterized in that** the user security module is in the form of a removable security module.

12. Method for creating and managing a local network according to claim 1, **characterized in that** the transmitting and re-encrypting device includes a security module, called converter module, said module receives and keeps an identifier of the master module that created the network, the converter module re-encrypting the data for said network.

13. Method for creating and managing a local network according to claim 10, **characterized in that** said master module identifier is transmitted to a management center during a connection step to said management center.
